# EUROPÄISCHE PATENTSCHRIFT

(11) **EP 3 280 255 B1**
(45) Veröffentlichungstag und Bekanntmachung des Hinweises auf die Patenterteilung: **29.09.2021**
(21) Anmeldenummer: 16712211.8
(22) Anmeldetag: 16.03.2016
(51) Int. Cl.: A01K 15/00, A61L 9/04, A01K 15/02

(54) **ECHTSTOFFPRÜFKÖRPER ZUR AUSBILDUNG VON SPRENGSTOFFSPÜRHUNDEN**
APARATUS FOR SUBSTANCES TO TRAIN DOGS FOR THE DETECTION OF EXPLOSIVE MATERIALS
DISPOSITIF POUR SUBSTANCES POUR ENTRAINER DES CHIENS A DETECTER DES MATERIAUX EXPLOSIVES

(30) Priorität: 10.04.2015 DE 102015004712
(43) Veröffentlichungstag der Anmeldung: 14.02.2018
(73) Patentinhaber: Diehl Defence GmbH & Co. KG, 88662 Überlingen (DE)
(72) Erfinder: WACHTER, Thomas, 90489 Nürnberg (DE); WALDVOGEL, Siegfried R., 55435 Gau-Algesheim (DE); BRUTSCHY, Malte, 79730 Murg (Baden) (DE); PHAM-SCHÖNWETTER, Oliver, 91207 Lauf (DE); MARTIN, Vanessa, 91052 Erlangen (DE)
(74) Vertreter: Diehl Patentabteilung
(86) Internationale Anmeldenummer: PCT/EP2016/000467
(87) Internationale Veröffentlichungsnummer: WO 2016/162107

(56) Entgegenhaltungen:
- DE-A1-102009 029 787
- DE-A1-102013 109 901
- US-A1- 2001 047 771
- US-A1- 2002 068 010
- US-A1- 2003 012 680
- US-A1- 2014 097 551
- US-A1- 2014 311 420

## Beschreibung

Die Erfindung betrifft einen Echtstoffprüfkörper zur Ausbildung von Sprengstoffspürhunden, der einen von einem Trägermaterial aufgenommenen Sprengstoff in einem Gehäuse umfasst. Solche Echtstoffprüfkörper sind aus der DE 10 2013 109901 A1, aus der US 2001/047771 A1, aus der US2014/097551 A1 und aus der US 2014/311420 A1 bekannt.

Aus der DE 10 2009 029 787 A1 ist es bekannt, als Duftquelle zum Training von Sprengstoffspürhunden eine Lösung einer neutralen ionischen Flüssigkeit mit einer detektierbaren Menge eines peroxidischen Sprengstoffs zu verwenden. Bei dem peroxidischen Sprengstoff kann es sich beispielsweise um Triacetontriperoxid (TATP) oder Hexamethylentriperoxiddiamin (HMTD) handeln. Durch das Lösen der Sprengstoffe in dem ionischen Lösungsmittel ergibt sich eine stabile und leicht handhabbare Form des jeweiligen Sprengstoffs. Die mechanische und thermische Empfindlichkeit des Sprengstoffs ist durch die Lösung in der ionischen Flüssigkeit deutlich reduziert, so dass die Lösung dadurch in konventionellen Laboratorien mit üblicher Ausrüstung einfach zu handhaben ist.

Weiterhin ist zum Training von Spürhunden das Verwenden eines Echtstoff-Mikromengen-Prüfkörpers (EMPK®) der Firma ExploTech GmbH, Köln, Deutschland bekannt. Dabei handelt es sich um einen kleine Sprengstoffspuren enthaltenden Metallschaum. Die darin enthaltene Sprengstoffmenge reicht jedoch aufgrund der Flüchtigkeit der darin enthaltenen Duftstoffe nur für eine verhältnismäßig kurze Absonderung einer Duftspur aus. Der den Sprengstoff enthaltende Metallschaum kann in einem, beispielsweise aus Messing bestehenden Trägergehäuse, enthalten sein. Durch einen Einstich in eine definierte Einstichstelle an der Gehäuseunterseite kann die Freisetzung der Duftspur des Prüfkörpers gestartet werden.

Aufgabe der vorliegenden Erfindung ist es, einen zur Ausbildung von Sprengstoffspürhunden geeigneten Echtstoffprüfkörper anzugeben, welcher eine verhältnismäßig lange und wiederholte Verwendung des Echtstoffprüfkörpers ermöglicht.

Die Aufgabe wird durch die Merkmale des Patentanspruchs 1 gelöst. Zweckmäßige Ausgestaltungen ergeben sich aus den Merkmalen der Patentansprüche 2 bis 8.

Erfindungsgemäß ist ein Echtstoffprüfkörper zur Ausbildung von Sprengstoffspürhunden vorgesehen, wobei der Echtstoffprüfkörper einen von einem festen Trägermaterial in Form von Kieselgur oder einen von einem flüssigen Trägermaterial in Form einer ionischen Flüssigkeit aufgenommenen Sprengstoff in einem Gehäuse mit einem Innenraum und einem Verschluss zum reversiblen gasdichten Verschließen des Innenraums oder eines den Innenraum umfassenden Raums umfasst. Das Trägermaterial mit dem Sprengstoff ist dabei in dem Innenraum enthalten. Weiterhin umfasst der Echtstoffprüfkörper ein gasdurchlässiges Mittel zum Verhindern des Austretens des Trägermaterials aus dem Innenraum, wenn der Innenraum oder der Raum nicht mittels des Verschlusses gasdicht verschlossen ist. Durch das gasdichte Verschließen mittels des Verschlusses können vom Sprengstoff abgegebene Duftstoffe nicht vom Innenraum auf die Außenseite des Echtstoffprüfkörpers gelangen und dort nicht von dem Sprengstoffspürhund wahrgenommen werden. Bei dem Verschluss kann es sich beispielsweise um einen Deckel, eine Kappe oder einen Stopfen, insbesondere aus einem elastischen Material, handeln.

Unabhängig vom verwendeten Trägermaterial wird die Konzentration des Sprengstoffs in dem Trägermaterial so gewählt, dass einerseits die ausdampfende Duftstoffmenge für die Detektion durch die Sprengstoffspürhunde ausreichend ist und andererseits der Sprengstoff so stark verdünnt ist, dass er nicht mehr detonationsfähig ist. Der Sprengstoff kann dann durch Reibung, Schlag oder Erhitzung nicht mehr zur Explosion gebracht werden. Dadurch fällt der verwendete Sprengstoff nicht mehr unter den Umgang mit Sprengstoffen regelnde Gesetze. Er kann gefahrlos und ohne Beachtung der für Sprengstoffe geltenden Auflagen und Sicherheitsregeln gehandhabt und transportiert werden. Um eine falsche Prägung der Spürhunde zu vermeiden, ist es günstig, wenn sämtliche Bestandteile des Echtstoffprüfkörpers außer dem Sprengstoff keinen oder allenfalls einen geringen Eigengeruch aufweisen. Das Trägermaterial, das Gehäuse, der Verschluss und das Mittel zum Verhindern des Austretens des Trägermaterials sollten daher geruchsfrei oder zumindest geruchsarm sein. Dadurch kann erreicht werden, dass der erfindungsgemäße Echtstoffprüfkörper nach Öffnen des Verschlusses nur oder zumindest im Wesentlichen nur vom Sprengstoff abgegebene Duftmoleküle entweichen lässt. Dadurch wird auch eine Beeinflussung des Eigengeruchs des Sprengstoffs durch die sonstigen Bestandteile des Echtstoffprüfkörpers zumindest weitgehend vermieden.

Unter einem gasdichten Verschließen des Innenraums wird verstanden, dass mittels des Verschlusses verhindert wird, dass Duftstoffe aus dem Innenraum in einen Bereich außerhalb des Echtstoffprüfkörpers gelangen können. Dies kann entweder durch ein direktes Verschließen des Innenraums erreicht werden oder auch durch ein gasdichtes Verschließen eines den Innenraum umfassenden Raums, so dass Duftstoffmoleküle zwar den Innenraum, nicht jedoch den verschlossenen Echtstoffprüfkörper verlassen können.

Der erfindungsgemäße Echtstoffprüfkörper ermöglicht durch den wiederverschließbaren gasdichten Verschluss, dass vom Sprengstoff abgegebene Duftmoleküle nur entweichen können, wenn der Verschluss geöffnet ist. Da die Duftstoffe des im Trägermaterial aufgenommenen Sprengstoffs relativ flüchtig sein können, kann dadurch die Gesamtverwendungsdauer des Echtstoffprüfkörpers erheblich verlängert werden. Durch den wiederverschließbaren Verschluss zum gasdichten Verschließen des Innenraums kann der Innenraum so verschlossen werden, dass zunächst keine flüchtigen Stoffe aus dem Innenraum des Gehäuses mehr entweichen und dass nach Erreichen einer Sättigung der im Innenraum befindlichen Luft mit flüchtigen Stoffen aus dem Sprengstoff keine weiteren flüchtigen Stoffe mehr aus dem Sprengstoff austreten bis durch erneutes Öffnen des Verschlusses die Konzentration der flüchtigen Bestandteile des Sprengstoffes in der das Trägermaterial umgebenden Luft im Innenraum des Gehäuses wieder abnimmt. Dadurch ist eine wiederholte und sichere Verwendung des Echtstoffprüfkörpers über einen längeren Zeitraum gewährleistet.

Das flüssige Trägermaterial ist erfindungsgemäß eine ionische Flüssigkeit, wie sie z.B. in der DE 10 2009 029 787 A1 beschrieben ist. Es kann sich dabei beispielsweise um eine lipophile und/oder neutrale ionische Flüssigkeit handeln. Als lipophile Anionen der ionischen Flüssigkeit eignen sich unter anderem Tetrafluoroborate, Triflimide, Perfluoralkylsulfate, Alkylsulfonate, Arylsulfonate, Perfluoralkylsulfonate, bis-Perfluoralkylsulfonimide, Acetate, Alkylcarboxylate, Isocyanate, Isothiocyanate, Thiosulfate, Halogenide (einschließlich lodide, Bromide, Chloride und Fluoride), Borate, Phosphate, Nitrate und Perchlorate, wobei Tetrafluorborate und Triflimide besonders geeignet sind. Geeignete Kationen der ionischen Flüssigkeit sind N-alkylsubstituierte Stickstoffheterozyklen, wie N-Alkylpyridinium-, N-Alkylpyrazinium-, N-Alkylpyridazinium-, N-Alkylpyrimidinium- und bis-N-Alkylimidazoliumionen, quatäre Ammonium- und Phosphoniumionen, wobei N,N-Dialkylimidazolium- und N-Alkylpyridiniumionen besonders bevorzugt sind. Besonders geeignete ionische Flüssigkeiten sind dabei 1-Ethyl-3-methylimidazolium-bis(trifluormethansulfonimid), 1-Butyl-3-methylimidazolium-bis(trifluormethansulfonimid), 1-Hexyl-3-methylimidazolium-bis(trifluormethansulfonimid), 1-Ethyl-3-methylimidazolium-tetrafluoroborat, 1-Hexyl-3-methylimidazolium-tetrafluoroborat, 1-Octyl-3-methylimidazolium-tetrafluoroborat, 1-Decyl-3-methylimidazoilium-tetrafluoroborat, 1-Decyl-3-methylimidazoilium-tetrafluoroborat, N-Hexylpyridinium-tetrafluoroborat, N-Hexylpyridinium-bis(trifluomethansulfonimid), N-Butyl-3-methylpyridinium-tetrafluoroborat und N-Butyl-4-methylpyridinium-tetrafluoroborat. Ionische Flüssigkeiten weisen den Vorteil eines extrem niedrigen Dampfdrucks auf und beeinflussen dadurch eine Duftsignatur des Sprengstoffs nicht oder zumindest nicht wesentlich.

Ein festes Trägermaterial ist insbesondere für solche Sprengstoffe geeignet, die nicht oder nicht gut in einer ionischen Flüssigkeit löslich sind. Als festes Trägermaterial kommt ein, insbesondere geruchsneutrales, inertes Material, wie erfindungsgemäß Kieselgur in Betracht. Kieselgur ist ein pulverförmiger weißer Feststoff, welcher zum größten Teil aus Siliciumdioxid von Schalen fossiler Kieselalgen besteht. Kieselgur ist chemisch inert, besitzt ein hohes Absorptionsvermögen, ist geruchslos und nicht brennbar. Kieselgur ist sehr leicht und hoch porös. Um vom festen Trägermaterial aufgenommen zu werden, wird der Sprengstoff entweder als Lösung oder als Feststoff auf dem inerten Material aufgebracht und/oder mit diesem vermischt. Dadurch wird der Sprengstoff verdünnt, wodurch seine Detonationsfähigkeit und seine Empfindlichkeit gegenüber Schlag, Reibung und Hitze verloren geht.

Wenn das feste Trägermaterial pulverförmig vorliegt, wie erfindungsgemäß in Form von Kieselgur, kann das Mittel zum Verhindern des Austretens des Trägermaterials aus dem Innenraum ein geruchsfreies oder zumindest geruchsarmes Filtermaterial, wie beispielsweise Glaswolle und/oder Glasfilterpapier, sein, welches in eine Öffnung des Innenraums gestopft wird, und dadurch ein Herausrieseln des pulverförmigen festen Trägermaterials verhindert.

Das Gehäuse und/oder der Verschluss des Echtstoffprüfkörpers kann/können zumindest zu einem wesentlichen Teil aus Glas oder einem Metall bestehen. Bei dem Metall kann es sich um Edelstahl handeln. Diese Materialien können besonders gut in geruchsfreier oder zumindest geruchsarmer Form bereitgestellt werden.

Das Gehäuse und/oder der Verschluss umfasst erfindungsgemäß eine Dichtung. Dadurch kann das gasdichte Verschließen des Innenraums durch den Verschluss besonders zuverlässig gewährleistet werden. Besonders geeignet ist eine geruchsfreie oder zumindest geruchsarme Dichtung. Erfindungsgemäß besteht die Dichtung aus Polytetrafluorethylen (PTFE).

Der Verschluss kann als Schraubverschluss ausgebildet sein. Dadurch kann das gasdichte Verschließen des Innenraums ebenfalls besonders zuverlässig gewährleistet werden. Ganz besonders zuverlässig ist der gasdichte Verschluss, wenn der Verschluss als Schraubverschluss ausgebildet ist und eine Dichtung vorhanden ist, die durch das Schließen des Schraubverschlusses zusammengepresst wird.

Bei einer Ausgestaltung des erfindungsgemäßen Echtstoffprüfkörpers ist das Trägermaterial flüssig und das Mittel zum Verhindern des Austretens des Trägermaterials ist ein saugfähiges Material. Bei dem saugfähigen Material kann es sich z. B. um Glaswolle oder ein anderes Material, welches aufgrund von Kapillarkräften das flüssige Trägermaterial aufsaugen kann, handeln. Ein solches Material kann einfach in den Innenraum so hineingestopft werden, dass es daraus nicht herausfallen kann. Wenn das Trägermaterial keine Duftstoffspuren des Sprengstoffs mehr freisetzt, kann ein solches saugfähiges Material mit unverbrauchtem flüssigen den Sprengstoff enthaltendem Trägermaterial, beispielsweise mittels einer Pipette, wieder getränkt oder weiter getränkt werden, ohne dass es dazu aus dem Innenraum entfernt werden müsste.

Ein Herausfließen von in flüssigem Trägermaterial aufgenommenen Sprengstoff aus dem Innenraum kann beispielsweise auch dadurch verhindert werden, dass als Mittel zum Verhindern des Austretens des Trägermaterials aus dem Innenraum eine, insbesondere geruchsfreie oder geruchsarme, gasdurchlässige aber flüssigkeitsundurchlässige Membran eingesetzt wird, mit welcher der Innenraum verschlossen wird.

Das Mittel zum Verhindern des Austretens des Trägermaterials kann zumindest eines der Materialien Glaswolle, Glasfaservlies, Glasfilterpapier und Glasfaserfilter umfassen. All diese Materialien können in geruchsfreier oder zumindest geruchsarmer Form bereitgestellt werden.

Bei einer Ausgestaltung des erfindungsgemäßen Echtstoffprüfkörpers umfasst das Gehäuse ein gasdurchlässiges Mittel zum Schutz vor mechanischer Beschädigung des Mittels zum Verhindern des Austretens des Trägermaterials und/oder zum zusätzlichen Schutz vor einem Herausfallen des Mittels zum Verhindern des Austretens des Trägermaterials aus dem Innenraum bei einer Trennung des Verschlusses vom Gehäuse. Alternativ kann ein solches Mittel auch an dem Gehäuse angeordnet sein. Das Mittel zum Schutz und/oder zusätzlichen Schutz kann ein aus einem Metall, insbesondere Edelstahl, bestehendes Netz oder Gitter umfassen. Das Mittel zum Schutz vor mechanischer Beschädigung ist im Allgemeinen als physikalische Barriere ausgebildet.

Der Schutz ist deshalb zusätzlich, weil das Mittel zum Verhindern des Austretens des Trägermaterials an sich bereits davor schützt, dass das Mittel aus dem Innenraum herausfallen kann, wenn der Innenraum nicht verschlossen ist. In einer solchen Situation ist ein Herausfallen durch mechanische Einwirkungen aber dennoch nicht vollkommen auszuschließen. Durch den zusätzlichen Schutz vor einem Herausfallen kann zuverlässig eine Kontamination der Umgebung mit dem Sprengstoff verhindert werden. Der Sprengstoff kann beispielsweise in einem flüssigen Trägermaterial, mit welchem ein saugfähiges Material, wie z. B. ein Metallschaum, als Mittel zum Verhindern des Austretens getränkt ist, aufgenommen sein. Ein Schutz vor mechanischer Beschädigung kann beispielsweise eine Beschädigung des Mittels zum Verhindern des Austretens des Trägermaterials durch einen Hundebiss oder bei einem Sturz des Echtstoffprüfkörpers verhindern. Wenn das Mittel zum Schutz und/oder zusätzlichen Schutz in Form eines Gitters ausgebildet ist, hat dies den Vorteil, dass ein im Innenraum angeordnetes Mittel zum Verhindern des Austretens des Trägermaterials in Form eines saugfähigen Materials durch das Gitter hindurch mittels einer Pipette mit dem von einem flüssigen Trägermaterial aufgenommenem Sprengstoff getränkt werden kann ohne dazu aus dem Innenraum entfernt werden zu müssen.

Das Mittel zum Verhindern des Austretens des Trägermaterials aus dem Innenraum und bei Vorhandensein das Mittel zum Schutz vor mechanischer Beschädigung und/oder zum zusätzlichen Schutz vor einem Herausfallen kann/können so ausgestaltet oder so an dem Gehäuse angeordnet sein, dass das Trägermaterial aus dem Innenraum entfernt und durch ein gleichartiges oder anderes Trägermaterial mit darin aufgenommenem weiteren Sprengstoff ersetzt und der Innenraum, wenn es dazu erforderlich ist, z. B. durch Entfernen, Aufschieben oder Aufklappen des Mittels zum Schutz und/oder zusätzlichen Schutz, geöffnet und nach dem Ersetzen des Trägermaterials durch das gleichartige oder andere Trägermaterial, z. B. durch erneutes Anbringen, Zuschieben oder Zuklappen des Mittels zum Schutz und/oder zusätzlichen Schutz, wieder verschlossen werden kann. Der weitere Sprengstoff kann dabei mit dem ursprünglich vom Trägermaterial aufgenommenen Sprengstoff identisch sein.

Das Gehäuse kann zum Öffnen und wieder Verschließen des Innenraums auch so aufgebaut sein, dass das Gehäuse zerlegt und wieder zusammengebaut werden kann. Dazu geeignete Aufbauten, beispielsweise durch Bereitstellung eines Schraubverschlusses des Innenraums und dazu geeignete Materialien sind dem Fachmann bekannt. Durch die Möglichkeit, das Trägermaterial zu ersetzen kann das Gehäuse wiederverwendet werden, wenn der von dem Trägermaterial aufgenommene Sprengstoff kein Duftsignal mehr abgibt.

Nachfolgend wird die Erfindung anhand von Ausführungsbeispielen näher erläutert. Es zeigen:
- Fig. 1: einen erfindungsgemäßen Echtstoffprüfkörper in verschlossenem Zustand,
- Fig. 2: den erfindungsgemäßen Echtstoffprüfkörper in geöffnetem Zustand,
- Fig. 3: eine Schnittdarstellung durch den erfindungsgemäßen Echtstoffprüfkörper ohne mit Trägermaterial gefülltem Innenraum und ohne das Mittel zum Verhindern des Austretens des Trägermaterials,
- Fig. 4: eine räumliche Darstellung des Gehäuses,
- Fig. 5: eine räumliche Darstellung eines Klemmrings,
- Fig. 6: eine räumliche Darstellung des Verschlusses,
- Fig. 7: eine Schnittdarstellung einer alternativen Ausgestaltung des Gehäuses in geöffnetem Zustand und
- Fig. 8: eine schematische Darstellung der Bestandteile des erfindungsgemäßen Echtstoffprüfkörpers ohne das Trägermaterial und das Mittel zum Verhindern des Austretens des Trägermaterials.

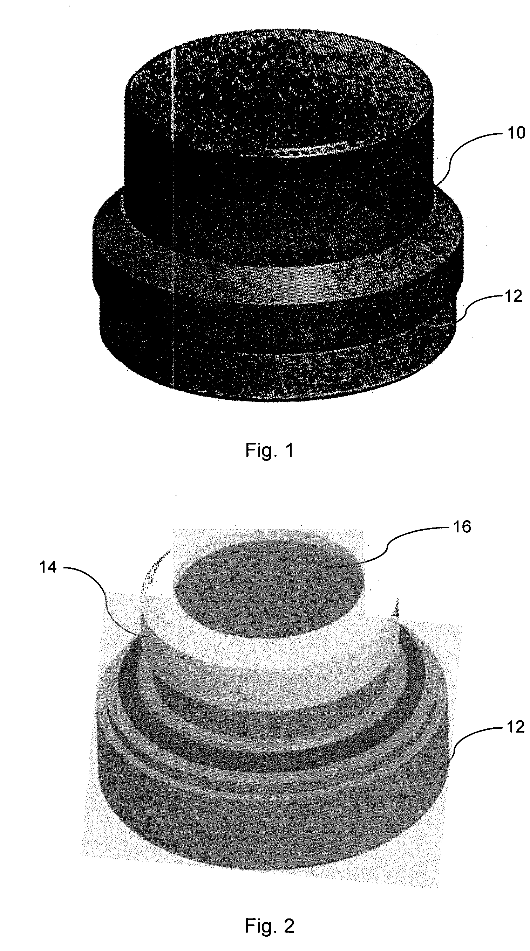

Fig. 1 zeigt das mit dem als Deckel ausgebildeten Verschluss 10 verschlossene Gehäuse 12. In diesem verschlossenen Zustand können keine Duftstoffe aus dem Innenraum 18 des Echtstoffprüfkörpers nach außen dringen.

Fig. 2 zeigt den in Fig. 1 dargestellten Echtstoffprüfkörper mit abgenommenem Deckel. Der hier nicht zu sehende Innenraum 18 ist von dem mittels des Klemmrings 14 gehaltenen Gitter 16 verschlossen. Das Gitter 16 bildet dabei das gasdurchlässige Mittel zum Schutz vor mechanischer Beschädigung des Mittels zum Verhindern des Austretens des Trägermaterials aus dem Innenraum 18.

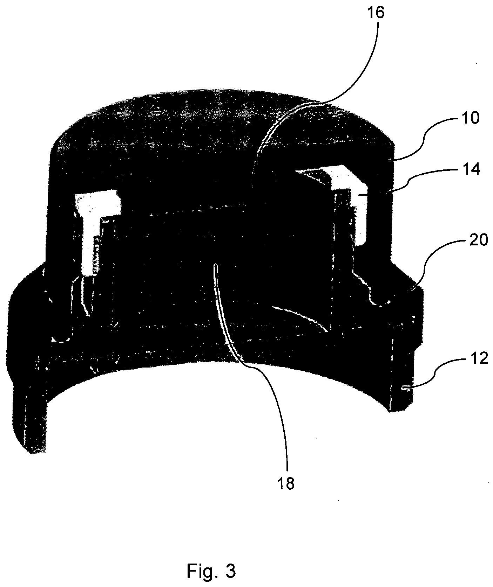

Fig. 3 zeigt in einer schematischen Schnittdarstellung das mit dem Verschluss 10 gasdicht verschlossene Gehäuse 12. Dabei drückt eine Kante des Verschlusses 10 auf eine umlaufende Dichtung 20 und verhindert dadurch einen Durchtritt von Duftstoffen aus dem Innenraum 18 über das von dem Klemmring 14 gehaltene Gitter 16 nach außen. Im Sinne der Erfindung wird dadurch ein den Innenraum 18 umfassender Raum gasdicht verschlossen. In Fig. 3 ist das Trägermaterial mit dem davon aufgenommenen Sprengstoff nicht dargestellt.

Alternativ zu einer Abdichtung über die Dichtung 20 kann eine Abdichtung auch dadurch erreicht werden, dass der Verschluss 10 in verschlossenem Zustand auf den elastisch ausgestalteten Klemmring 14 drückt, so dass der Innenraum 18 dadurch gasdicht verschlossen wird.

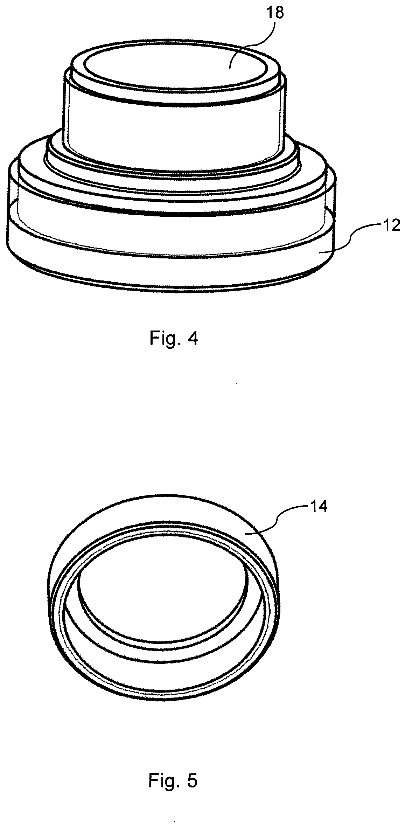

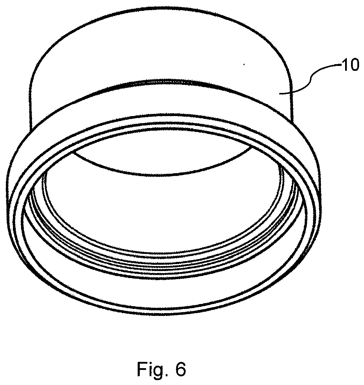

Fig. 4 zeigt das Gehäuse 12 mit dem Innenraum 18, Fig. 5 den Klemmring 14 und Fig. 6 den als Deckel ausgebildeten Verschluss 10, jeweils in isolierter Darstellung.

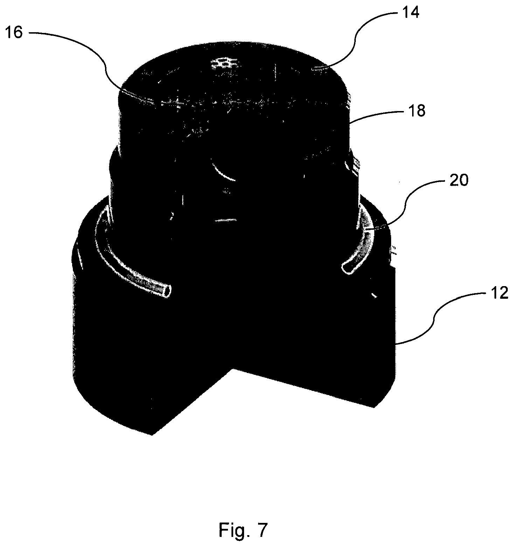

Fig. 7 zeigt eine alternative Darstellung des erfindungsgemäßen Echtstoffprüfkörpers, bei welcher der Boden des Gehäuses 12 dicker ausgebildet ist als bei dem in den Figuren 1 bis 3 dargestellten Echtstoffprüfkörper. Dadurch wird die Handhabung des Echtstoffprüfkörpers erleichtert, weil der Boden des Gehäuses 12 dadurch einfacher auch unter schwierigen Bedingungen, beispielsweise beim Tragen von Arbeitshandschuhen, gegriffen werden kann. Die sonstige Konstruktion entspricht der in Fig. 3 dargestellten, d. h. in dem Gehäuse 12 ist ein Innenraum 18 angeordnet. Ein darin enthaltenes hier nicht dargestelltes Mittel zum Verhindern des Austretens des Trägermaterials wird von einem von einem Klemmring 14 gehaltenen Gitter 16 vor mechanischer Beschädigung geschützt. Eine Dichtung 20 ermöglicht einen gasdichten Verschluss durch das Aufsetzen des Verschlusses 10.

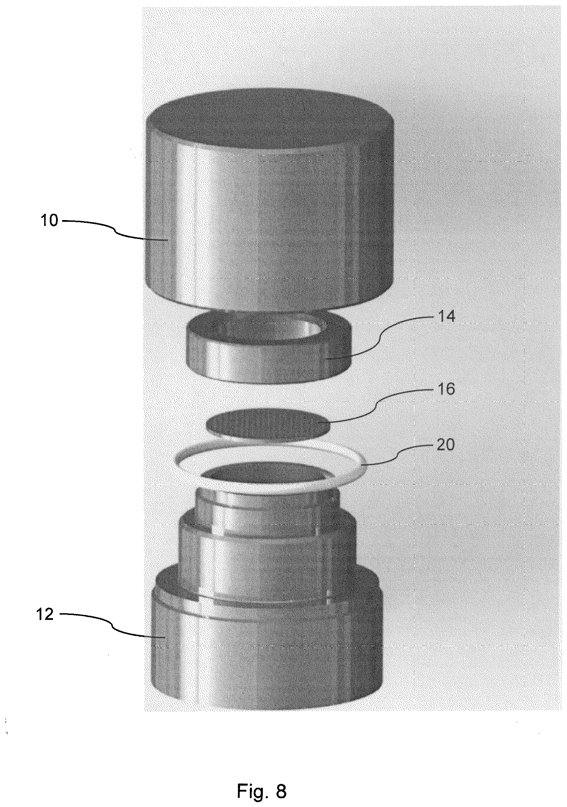

Fig. 8 zeigt eine schematische auseinandergezogene Darstellung des erfindungsgemäßen Echtstoffprüfkörpers mit einem Verschluss 10 zum Aufsetzen auf das Gehäuse 12, wobei der gasdichte Abschluss zwischen dem Verschluss 10 und dem Gehäuse 12 durch die Dichtung 20 gewährleistet wird. Das Gitter 16 kann in das Gehäuse 12 so eingesetzt und vom Klemmring 14 gehalten werden, dass dadurch der hier nicht dargestellte Innenraum 18 bzw. das darin enthaltene Mittel zum Verhindern des Austretens des Trägermaterials aus dem Innenraum 18 vor mechanischer Beschädigung geschützt wird.

### Bezugszeichenliste

- 10: Verschluss
- 12: Gehäuse
- 14: Klemmring
- 16: Gitter
- 18: Innenraum
- 20: Dichtung

## Patentansprüche

1. Echtstoffprüfkörper zur Ausbildung von Sprengstoffspürhunden,
wobei der Echtstoffprüfkörper einen von einem flüssigen Trägermaterial in Form einer ionischen Flüssigkeit aufgenommenen Sprengstoff in einem Gehäuse (12) mit einem Innenraum (18) und einem Verschluss (10) zum reversiblen gasdichten Verschließen des Innenraums (18) oder eines den Innenraum (18) umfassenden Raums umfasst,
wobei das Trägermaterial mit dem Sprengstoff in dem Innenraum (18) enthalten ist,
wobei der Echtstoffprüfkörper weiterhin ein gasdurchlässiges Mittel zum Verhindern des Austretens des Trägermaterials aus dem Innenraum (18), wenn der Innenraum (18) oder der Raum nicht mittels des Verschlusses (10) gasdicht verschlossen ist, umfasst,
wobei das Gehäuse (12) und/oder der Verschluss (10) eine Dichtung (20) umfasst/umfassen,
wobei die Dichtung aus Polytetrafluorethylen (PTFE) besteht.

2. Echtstoffprüfkörper nach Anspruch 1,
wobei das Gehäuse (12) und/oder der Verschluss (10) zumindest zu einem wesentlichen Teil aus Glas oder einem Metall besteht/bestehen.

3. Echtstoffprüfkörper nach einem der vorhergehenden Ansprüche,
wobei der Verschluss (10) als Schraubverschluss ausgebildet ist.

4. Echtstoffprüfkörper nach einem der vorhergehenden Ansprüche,
wobei das Mittel zum Verhindern des Austretens des Trägermaterials ein saugfähiges Material ist.

5. Echtstoffprüfkörper nach einem der vorhergehenden Ansprüche,
wobei das Mittel zum Verhindern des Austretens des Trägermaterials zumindest eines der Materialien Glaswolle, Glasfaservlies, Glasfilterpapier und Glasfaserfilter umfasst.

6. Echtstoffprüfkörper nach einem der vorhergehenden Ansprüche,
wobei das Gehäuse (12) ein gasdurchlässiges Mittel zum Schutz vor mechanischer Beschädigung des Mittels zum Verhindern des Austretens des Trägermaterials und/oder zum zusätzlichen Schutz vor einem Herausfallen des Mittels zum Verhindern des Austretens des Trägermaterials aus dem Innenraum (18) bei einer Trennung des Verschlusses (10) vom Gehäuse (12) umfasst oder wobei ein solches Mittel an dem Gehäuse (12) angeordnet ist.

7. Echtstoffprüfkörper nach Anspruch 6,
wobei das Mittel zum Schutz und/oder zusätzlichen Schutz ein aus einem Metall bestehendes Netz oder Gitter (16) umfasst.

8. Echtstoffprüfkörper nach einem der vorhergehenden Ansprüche,
wobei das Mittel zum Verhindern des Austretens des Trägermaterials und bei Vorhandensein das Mittel zum Schutz vor mechanischer Beschädigung und/oder zum zusätzlichen Schutz vor einem Herausfallen so ausgestaltet oder so an dem Gehäuse (12) angeordnet sind/ist, dass das Trägermaterial aus dem Innenraum (18) entfernt und durch ein gleichartiges oder anderes Trägermaterial mit darin aufgenommenem weiteren Sprengstoff ersetzt und der Innenraum (18), wenn es dazu erforderlich ist, geöffnet und nach dem Ersetzen des Trägermaterials durch das gleichartige oder andere Trägermaterial wieder verschlossen werden kann.

## Claims

1. Genuine-material test piece for the training of explosives sniffer dogs,
wherein the genuine-material test piece comprises an explosive assimilated by a liquid carrier material in the form of an ionic liquid in a housing (12) with an interior space (18) and a closure (10) for the reversible gastight closure of the interior space (18), or a space comprising the interior space (18), wherein the carrier material with the explosive is contained in the interior space (18),
wherein the genuine-material test piece furthermore comprises a gas-permeable means for preventing the carrier material from escaping from the interior space (18) if the interior space (18), or the space, is not closed by means of the closure (10) in a gastight manner,
wherein the housing (12) and/or the closure (10) comprises/comprise a seal (20),
wherein the seal consists of polytetrafluoroethylene (PTFE) .

2. Genuine-material test piece according to Claim 1,
wherein the housing (12) and/or the closure (10) consists/consist, at least substantially, of glass or a metal.

3. Genuine-material test piece according to one of the preceding claims,
wherein the closure (10) is designed as a screw closure.

4. Genuine-material test piece according to one of the preceding claims,
wherein the means for preventing the escape of the carrier material is an absorbent material.

5. Genuine-material test piece according to one of the preceding claims,
wherein the means for preventing the escape of the carrier material comprises at least one of the materials: glass wool, nonwoven glass fibre, glass filter paper and glass fibre filter.

6. Genuine-material test piece according to one of the preceding claims,
wherein the housing (12) comprises a gas-permeable means for protecting the means for preventing the escape of the carrier material from mechanical damage, and/or for additionally protecting the means for preventing the escape of the carrier material from falling out of the interior space (18) when the closure (10) is separated from the housing (12), or wherein such a means is arranged on the housing (12).

7. Genuine-material test piece according to Claim 6,
wherein the means for providing protection and/or additional protection comprises a mesh or grid (16) consisting of a metal.

8. Genuine-material test piece according to one of the preceding claims,
wherein the means for preventing the escape of the carrier material and, if present, the means for providing protection against mechanical damage and/or for providing additional protection against falling out is/are configured or arranged on the housing (12) in such a way that the carrier material is removed from the interior space (18) and replaced by a similar or different carrier material with further explosive assimilated therein, and, when required, the interior space (18) can be opened, and after replacing the carrier material with the similar or different carrier material, can be reclosed.

## Revendications

1. Corps de test en vrai matériau destiné à l'entraînement de chiens détecteurs d'explosifs,
le corps de test en vrai matériau étant un explosif, reçu sous la forme d'un liquide ionique par un matériau porteur liquide, dans un boîtier (12) comprenant un espace intérieur (18) et une fermeture (10) destinée à fermer de manière étanche aux gaz et de manière réversible l'espace intérieur (18) ou un espace comprenant l'espace intérieur (18),
le matériau porteur pourvu de l'explosif étant contenu dans l'espace intérieur (18),
le corps de test en vrai matériau comprenant en outre un moyen perméable aux gaz destiné à empêcher le matériau porteur de s'échapper de l'espace intérieur (18) si l'espace intérieur (18) ou l'espace n'est pas fermé de manière étanche aux gaz à l'aide de la fermeture (10),
le boîtier (12) et/ou la fermeture (10) comprenant une garniture d'étanchéité (20),
la garniture d'étanchéité étant en polytétrafluoroéthylène (PTFE).

2. Corps de test en vrai matériau selon la revendication 1,
le boîtier (12) et/ou la fermeture (10) étant, au moins pour une partie importante, en verre ou en un métal.

3. Corps de test en vrai matériau selon l'une des revendications précédentes,
la fermeture (10) étant conçue sous la forme d'une fermeture à vis.

4. Corps de test en vrai matériau selon l'une des revendications précédentes,
le moyen pour empêcher la sortie du matériau porteur étant un matériau absorbant.

5. Corps de test en vrai matériau selon l'une des revendications précédentes,
le moyen pour empêcher le matériau porteur de s'échapper comprenant l'un au moins des matériaux suivants : la laine de verre, un non-tissé en fibres de verre, du papier filtre en verre et un filtre en fibres de verre.

6. Corps de test en vrai matériau selon l'une des revendications précédentes,
le boîtier (12) comprenant un moyen perméable aux gaz destiné à apporter au moyen, destiné à empêcher le matériau porteur de s'échapper, une protection contre les dommages mécaniques et/ou à apporter au moyen, destiné à empêcher le matériau porteur de s'échapper de l'espace intérieur (18), une protection supplémentaire contre toute sortie si la fermeture (10) est séparée du boîtier (12) ou un tel moyen étant disposé au niveau du boîtier (12).

7. Corps de test en vrai matériau selon la revendication 6,
le moyen de protection et/ou de protection supplémentaire comprenant un treillis ou grille (16) réalisé en un métal.

8. Corps de test en vrai matériau selon l'une des revendications précédentes,
le moyen destiné à empêcher le matériau porteur de s'échapper et, le cas échéant, le moyen de protection contre les dommages mécaniques et/ou de protection supplémentaire contre les chutes, étant disposés au niveau du boîtier (12) de manière à retirer le matériau porteur de l'espace intérieur (18) et à le remplacer par un matériau porteur similaire ou différent contenant des explosifs supplémentaires et l'espace intérieur (18) pouvant, si nécessaire, être ouvert et refermé après que le matériau porteur a été remplacé par un matériau porteur identique ou différent.
